(19) Europäisches Patentamt
European Patent Office
Office européen des brevets

(11) **EP 4 143 138 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **21721498.0**

(22) Anmeldetag: **24.04.2021**

(51) Internationale Patentklassifikation (IPC):
***B01D 3/38*** *(2006.01)*    ***C02F 101/38*** *(2006.01)*
***C02F 1/00*** *(2023.01)*    ***B01D 3/34*** *(2006.01)*
***C02F 1/20*** *(2023.01)*

(52) Gemeinsame Patentklassifikation (CPC):
**B01D 3/346; B01D 3/38; C02F 1/008; C02F 1/20;**
C02F 2101/38; C02F 2303/18

(86) Internationale Anmeldenummer:
**PCT/EP2021/060761**

(87) Internationale Veröffentlichungsnummer:
**WO 2021/219520 (04.11.2021 Gazette 2021/44)**

(54) **VERFAHREN ZUR REINIGUNG VON MIT NITROBENZOL BELASTETEN WÄSSRIGEN ABWASSERSTRÖMEN**

METHOD FOR CLEANING AQUEOUS WASTEWATER STREAMS LOADED WITH NITROBENZENE

PROCÉDÉ D'ÉPURATION DE FLUX D'EAUX USÉES AQUEUX CHARGÉS DE NITROBENZÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2020 EP 20171565**
**23.02.2021 EP 21158732**

(43) Veröffentlichungstag der Anmeldung:
**08.03.2023 Patentblatt 2023/10**

(73) Patentinhaber: **Covestro Deutschland AG**
**51373 Leverkusen (DE)**

(72) Erfinder:
• **ROSIN, Thomas**
**47198 Duisburg (DE)**
• **DRINDA, Peter**
**47829 Krefeld (DE)**
• **PILARCZYK, Klaus**
**47809 Krefeld (DE)**

(74) Vertreter: **Levpat**
**c/o Covestro AG**
**Gebäude K12**
**51365 Leverkusen (DE)**

(56) Entgegenhaltungen:
WO-A1-2014/170309    ES-T3- 2 212 351
US-B2- 7 402 192

## Beschreibung

Die vorliegende Erfindung betrifft ein Verfahren zum Reinigen eines mit Nitrobenzol verunreinigten Abwasserstroms AW1, umfassend **(I)** eine Strippung des Abwasserstroms AW1 mit einem Strippgas SG1 in einer kontinuierlich betriebenen Stripperkolonne unter Erhalt eines Abwasserstroms AW2, der Nitrobenzol in gegenüber AW1 verringerter Konzentration ($c_{NB,AW2}$) enthält, **(II)** eine weitere Reinigung des Abwasserstroms AW2 in einer Abwasseraufbereitungsanlage, wobei für die Konzentration an Nitrobenzol im Abwasserstrom AW2 ein Soll-Wert ($c_{NB,AW2,SOLL}$) festgelegt wird, der größer als null ist, sich aber an den Anforderungen der Abwasseraufbereitungsanlage an den Höchstgehalt an Nitrobenzol der ihr zugeführten Abwasserströme orientiert, wobei in einer Datenbasis für mindestens eine Kombination an gegebenen Randbedingungen von **(a)** Nitrobenzolkonzentration in AW1, **(b)** der Temperatur von AW1 und (c) der Temperatur von SG1 eine Schar von linearen mathematischen Beziehungen der Art $\dot{m}_{SG1} = x \cdot \dot{m}_{AW1}$ hinterlegt ist, die einen Bereich an Konzentrationen von Nitrobenzol in AW2 definieren, wobei die Schar neben einer mathematischen Beziehung (0), die dem Soll-Wert $c_{NB,AW2,SOLL}$ entspricht, mindestens noch eine erste lineare mathematische Beziehung (1) für einen ersten Wert von $c_{NB,AW2}$, der 98 % des Soll-Werts $c_{NB,AW2,SOLL}$ entspricht, und eine zweite lineare mathematische Beziehung (2) für einen zweiten Wert von $c_{NB,AW2}$, der 102 % des Soll-Werts $c_{NB,AW2,SOLL}$ entspricht, umfasst, und wobei der Mengenstrom des Strippgases so auf den Mengenstrom des Abwassers AW1 abgestimmt wird, dass der Mengenstrom von AW1 innerhalb eines Wertebereiches ($\overline{AB}$) liegt, der durch die erste mathematische Beziehung (1) und die zweite mathematische Beziehung (2) bei dem jeweiligen Mengenstrom von AW1 aufgespannt wird, und Regeln der Konzentration an Nitrobenzol in AW2 ($c_{NB,AW2}$), indem bei einem gemessenen Ist-Wert dieser Konzentration, der außerhalb eines Fensters von > 98 % bis < 102 % des Soll-Werts liegt, der Mengenstrom an Strippgas SG1 entsprechend angepasst wird.

In vielen Produktionsprozessen fallen wässrige Abwasserströme an, die mit organischen Verbindungen belastet sind. Üblicherweise werden solche Ströme zunächst in dem Betrieb, in dem sie anfallen, vorgereinigt und dann einer Abwasseraufbereitungsanlage (Kläranlage) zugeführt, bevor sie in die Umwelt entlassen werden. Bereits die der Abwasseraufbereitungsanlage zugeführten Abwasserströme müssen Mindestanforderungen an ihre Reinheit erfüllen, insbesondere um zu verhindern, dass die in einer biologischen Kläranlage eingesetzten Mikroorganismen durch eine zu hohe Konzentration für sie toxischer organischer Verbindungen geschädigt oder gar abgetötet werden. Die Betreiber von Abwasseraufbereitungsanlagen erstellen daher zunehmend strenger werdende Spezifikationen für die Reinheit der von ihnen *abzunehmenden* Abwässer, weshalb der innerbetrieblichen Vorreinigung eine immer wichtigere Rolle zukommt. Eine solche innerbetriebliche Vorreinigung erfolgt in vielen Fällen mittels Strippung des Abwassers in einer Stripperkolonne (auch Abwasserstripper genannt). Die vorliegende Erfindung befasst sich mit dem Betrieb einer solchen Stripperkolonne.

WO 2014/170309 Al beschreibt ein Verfahren zur Aufarbeitung von alkalischem Abwasser, das bei der Wäsche von rohem, durch Nitrierung von Benzol erhaltenem Nitrobenzol entsteht, wobei (i) das alkalische Abwasser unter Ausschluss von Sauerstoff bei einem gegenüber Atmosphärendruck erhöhten Druck auf eine Temperatur von 150 °C bis 500 °C erhitzt wird; (ii) das in (i) erhaltene Abwasser mit einer Base versetzt wird; (iii) das in (ii) erhaltene Abwasser durch Strippung mit einem Stripp-Gas weiter gereinigt und anschließend der mit Verunreinigungen beladene Stripp-Gasstrom auf eine Temperatur von 10 °C bis 60 °C abgekühlt wird. Die Anmeldung geht nicht auf regelungstechnische Details der Strippung ein.

US 7,402,192 B2 beschreibt ein Verfahren zur kontinuierlichen Behandlung von Industrieabwasser, das verschiedene Verunreinigungen enthalten kann. Als einziges konkretes Beispiel für ein geeignetes Industrieabwasser wird das Abwasser aus einer Raffinerie genannt. Das Abwasser wird über zumindest eine Zuführleitung (7 , 13) in den oberen Teil einer Strippkolonne (8) eingeleitet, in der es nach unten fließ, wobei in diese Säule (8) ein Wasserdampfstrom auf einer solchen Höhe (bei 14) eingespritzt wird, dass das Abwasser und der Wasserdampf in der Kolonne (8) im Gegenstrom fließen. Die durch das Strippen des Abwassers durch diesen Dampf herausgezogenen Gase werden am Kopf der Kolonne (bei 15) zurückgewonnen, und das behandelte Wasser wird im Sumpf der Strippkolonne (8) abgelassen (bei 16). Das Verfahren zeichnet sich dadurch aus, dass online zumindest ein Abschnitt des Ultraviolettspektrums von Verunreinigungen, insbesondere auch der durch Sulfide, Ammoniak und Phenole gebildeten Gruppe, bestimmt wird. Die Messung erfolgt in in Leitungen zum Zuführen (7 , 13) des Abwassers oder in der Leitung zum Ablassen des behandelten Wassers (16) der Kolonne (8). Durch mathematische Verarbeitung der gemessenen Intensitäten wird zumindest ein Verunreinigungsprodukt bestimmt, das in den entnommenen Proben enthalten ist. Diese Informationen werden in Abhängigkeit von den so gewonnenen Ergebnissen und durch Vergleich mit vorbestimmten Einstellwerten in Form von elektrischen Signalen abgebildet, welche die Zuführdurchsätze der Stripperkolonne an Abwasser und Wasserdampf kontrollieren.

EP 1 019 324 B1 (auch veröffentlicht als ES 2 212 351 T3) beschreibt ein Verfahren zur Abwasserreinigung durch Mischen und Verdampfen des zu reinigenden Abwassers in einem Schleppgasstrom unter Wärmeausnutzung von gereinigt abströmendem und komprimiertem Schleppgas-Wasserdampfgemisch zur Aufheizung des Schleppgas-Abwassergemisches und Entfernung des durch Überhitzen des Wasserdampfs gebildeten Rückstandes. Die Druckschrift beschreibt ferner eine Anordnung zur Durchführung dieses Verfahrens.

Unter wirtschaftlichen Gesichtspunkten ist es von großer Wichtigkeit, eine solche Stripperkolonne möglichst energiesparend zu betreiben, ohne die vorgegebenen Anforderungen an den Gehalt an (insbesondere für Mikroorganismen toxischen) Organika im gereinigten Abwasser zu unterlaufen. Ein weiteres Ziel liegt darin, den Betrieb einer Stripperkolonne möglichst bedienerfreundlich auszugestalten, d. h. in einer Art und Weise, die ein manuelles Eingreifen des Bedienpersonals nur möglichst selten und wenn dann möglichst ohne die Notwendigkeit, komplexe Vorgänge durchführen zu müssen, erforderlich macht.

Zur Erreichung dieser Ziele bedarf es einer effizienten Regelung der für die innerbetriebliche Reinigung eingesetzten Stripperkolonne. Dementsprechend stellt die vorliegende Erfindung Folgendes bereit:

Ein **Verfahren zum Reinigen eines mit Nitrobenzol verunreinigten Abwasserstroms A W1,** der Nitrobenzol (NB) in einer Konzentration $c_{NB,AW1}$ enthält, umfassend:

(I) Strippen des Abwasserstroms AW1 mit einem Strippgas SG1 in einer kontinuierlich betriebenen Stripperkolonne unter Erhalt eines Abwasserstroms AW2, der Nitrobenzol in einer Konzentration $c_{NB,AW2}$ (die kleiner als $c_{NB,AW1}$ ist) enthält und eines mit Nitrobenzol beladenen Strippgasstroms SG2, wobei der Abwasserstrom AW1 der Stripperkolonne mit einem Mengenstrom $\dot{m}_{AW1}$ und einer Temperatur $T_{AW1}$ und das Strippgas SG1 der Stripperkolonne mit einem Mengenstrom $\dot{m}_{SG1}$ und einer Temperatur $T_{SG1}$ zugeführt werden und wobei die Konzentration an Nitrobenzol im Abwasserstrom AW2 $c_{NB,AW2}$ kontinuierlich oder Intervallen (insbesondere jedoch mindestens bei einer Änderung des Mengenstroms $\dot{m}_{AW1}$) an einer Messstelle gemessen wird; und

(II) Reinigen des Abwasserstroms AW2 in einer Abwasseraufbereitungsanlage unter Erhalt eines gereinigten Abwasserstroms AW3, der Nitrobenzol in einer Konzentration $c_{NB,AW3}$ (die kleiner ist als $c_{NB,AW2}$) enthält,
wobei die Konzentration an Nitrobenzol in dem der Abwasseraufbereitungsanlage zugeführten Abwasserstrom AW2 einen vorgegebenen Maximalwert $c_{NB,AW2,MAX}$ nicht überschreiten darf und für die Konzentration an Nitrobenzol im Abwasserstrom AW2 $c_{NB,AW2}$ ein Soll-Wert $c_{NB,AW2,SOLL}$ festgelegt wird, der größer als null ist und auf einen Wert innerhalb eines durch die Bedingung

$$0{,}50 \cdot c_{NB,AW2,MAX} \leq c_{NB,AW2,SOLL} \leq 0{,}95 \cdot c_{NB,AW2,MAX}$$

definierten Zielbereichs festgelegt wird;

wobei der Betrieb der Stripperkolonne umfasst:

(i) Kontinuierliches Zuführen des Strippgases SG1 und des Abwasserstroms AW1 in die Stripperkolonne, wobei in einer Datenbasis für mindestens eine Kombination an gegebenen Randbedingungen von (a) $c_{NB,AW1}$, (b) der Temperatur $T_{AW1}$ und (c) der Temperatur $T_{SG1}$ eine Schar von linearen mathematischen Beziehungen der Art

$$\dot{m}_{SG1} = x \cdot \dot{m}_{AW1}$$

hinterlegt ist, von denen jede einer Konzentration $c_{NB,AW2}$ entspricht, sodass die Schar von linearen mathematischen Beziehungen einen Bereich an Konzentrationen $c_{NB,AW2}$ definiert, wobei die Schar linearer mathematischer Beziehungen neben einer mathematischen Beziehung (0), die dem Soll-Wert $c_{NB,AW2,SOLL}$ entspricht, mindestens noch eine erste lineare mathematische Beziehung (1) für einen ersten Wert von $c_{NB,AW2}$, der 98 % des Soll-Werts $c_{NB,AW2,SOLL}$ entspricht, und eine zweite lineare mathematische Beziehung (2) für einen zweiten Wert von $c_{NB,AW2}$, der 102 % des Soll-Werts $c_{NB,AW2,SOLL}$ entspricht, umfasst,

und wobei der Mengenstrom $\dot{m}_{SG1}$ für einen zu einem Zeitpunkt $t_i$ gegebenen Mengenstrom $\dot{m}_{AW1}(t_i)$ so gewählt wird (wobei der Mengenstrom $\dot{m}_{SG1}$ so auf den Mengenstrom $\dot{m}_{AW1}(t_i)$ abgestimmt wird), dass der Mengenstrom $\dot{m}_{SG1}$ innerhalb eines Wertebereiches $(\overline{AB})$ liegt, der durch die erste mathematische Beziehung (1) und die zweite mathematische Beziehung (2) bei dem zum Zeitpunkt $t_i$ gegebenen Mengenstrom $\dot{m}_{AW1}(t_i)$ aufgespannt wird;

(ii) Regeln der Konzentration $c_{NB,AW2}$,

indem bei einer an der Messstelle gemessenen Ist-Konzentration $c_{NB,AW2,IST}$ an Nitrobenzol im Abwasser AW2, die gleich oder kleiner ist als $0{,}98 \cdot c_{NB,AW2,SOLL}$, der Mengenstrom an Strippgas SG1 $\dot{m}_{SG1}$ verringert wird,

und indem bei einer an der Messstelle gemessenen Ist-Konzentration $c_{NB,AW2,IST}$ an Nitrobenzol im Abwasser AW2, die gleich oder größer ist als $1{,}02 \cdot c_{NB,AW2,SOLL}$, der Mengenstrom an Strippgas SG1 $\dot{m}_{SG1}$ erhöht wird.

Überraschend wurde nämlich gefunden, dass sich die genannten Ziele erreichen lassen oder man sich diesen zumindest annähert, wenn die Stripperkolonne nicht in der Weise geregelt wird, dass die mittels ihrer zu erzielende Reinheit "so groß wie irgend möglich" ist (d. h. $c_{NB,AW2}$ so klein wie irgend möglich, idealerweise unterhalb der Messschwelle, ist), sondern man bewusst einen Wert für $c_{NB,AW2}$ zulässt, der größer als "null" (d. h. in diesem Zusammenhang: *der oberhalb der Messschwelle liegt*) ist und sogar bis zu 95 % des vom Betreiber der Abwasseraufbereitungsanlage vorgegebenen maximal zulässigen Werts (welcher ebenfalls größer als null ist) betragen kann, und diesen Wert mittels kontinuierlich oder in Intervallen durchgeführter Messungen und erforderlichenfalls daraus abgeleiteter Veränderungen der der Stripperkolonne bei gegebenem Abwassermengenstrom pro Zeiteinheit zuzuführenden Strippgasmenge regelt. Unter Umweltschutzgesichtspunkten kommt es letzten Endes nur darauf an, dass das *in die Umwelt* abgegebene Abwasser, also im Regelfall das eine Abwasseraufbereitungsanlage *verlassende* Abwasser, eine möglichst hohe Reinheit hat, mindestens jedoch die im Einzelfall anzuwendenden gesetzlichen Vorgaben erfüllt; wo genau diese Reinheit erzielt wird, ob größtenteils in der innerbetrieblichen Vorreinigung oder in der Abwasseraufbereitungsanlage selbst, ist *in diesem Zusammenhang* nebensächlich oder sogar belanglos. Im Rahmen der vorliegenden Erfindung wurde jedoch gefunden, dass es unter *wirtschaftlichen Gesichtspunkten* von entscheidender Bedeutung sein kann, den insgesamt erzielten Reinigungsgrad in bestimmter Weise auf die verschiedenen Reinigungsstufen aufzuteilen (selbstverständlich unter Beachtung der geltenden Randbedingungen, wie die bereits erwähnten Anforderungen der Betreiber von Abwasseraufbereitungsanlagen). Dieser Erkenntnis trägt das erfindungsgemäße Verfahren Rechnung, indem eine Regelung bereitgestellt wird, die selbiges in effizienter Weise ermöglicht.

Der im erfindungsgemäßen Verfahren zu reinigende *"mit Nitrobenzol"* verunreinigte Abwasserstrom AW1 kann selbstverständlich neben Nitrobenzol auch eine oder mehrere weitere organische Verbindung(en) umfassen; dies verlässt den Rahmen der vorliegenden Erfindung nicht. Bei den wässrigen Abwasserströmen aus einem Verfahren zur Herstellung von Nitrobenzol (hier insbesondere saures und alkalisches Abwasser; siehe die Erläuterungen weiter unten) ist es regelmäßig so, dass Nitrobenzol relativ zu anderen organischen Verunreinigungen wie etwa Benzol in vergleichsweise hoher Konzentration vorliegt, sodass es sinnvoll ist, die Regelung an Nitrobenzol auszurichten.

In den beigefügten Zeichnungen zeigen

FIG. 1    eine schematische Darstellung einer im erfindungsgemäßen Verfahren einsetzbaren Stripperkolonne;

FIG. 2    eine schematische Darstellung der Änderung von $\dot{m}_{AW1}$ in einem fiktiven Zeitraum $t_0$ bis $t_4$ mit den Zwischenzeiträumen $t_0$ bis $t_2$ und $t_2$ bis $t_4$ .

FIG. 3    eine schematische Darstellung der Zusammenhänge zwischen den Mengenströmen von SG1, AW1 und $c_{NB,AW2,SOLL}$ im Zeitraum $t_0$ bis $t_2$;
und

FIG. 4    eine schematische Darstellung der Zusammenhänge zwischen den Mengenströmen von SG1, AW1 und $c_{NB,AW2,SOLL}$ im Zeitraum $t_2$ bis $t_4$.

Es folgt zunächst eine Kurzzusammenfassung verschiedener möglicher Ausführungsformen.

In einer **ersten Ausführungsform** der Erfindung, die mit allen anderen Ausführungsformen kombiniert werden kann, wird als Strippgas Wasserdampf und/oder Stickstoff eingesetzt.

In einer **zweiten Ausführungsform** der Erfindung, die mit allen anderen Ausführungsformen kombiniert werden kann, wird $c_{NB,AW2,IST}$ durch Nahinfrarotspektroskopie oder Gaschromatographie bestimmt.

In einer **dritten Ausführungsform** der Erfindung, die eine besondere Ausgestaltung der zweiten Ausführungsform ist, wird $c_{NB,AW2,IST}$ durch Nahinfrarotspektroskopie bestimmt.

In einer **vierten Ausführungsform** der Erfindung, die mit allen anderen Ausführungsformen kombiniert werden kann, wird an zwei oder mehr (insbesondere an zwei) Messstellen unabhängig voneinander ein Wert für $c_{NB,AW2}$ ermittelt, und es wird aus den erhaltenen Messwerten der Mittelwert gebildet, welcher als Wert für $c_{NB,AW2,IST}$ verwendet wird.

In einer **fünften Ausführungsform** der Erfindung, die eine besondere Ausgestaltung der sechsten Ausführungsform ist, wird im Falle des Versagens einer oder mehr der zwei oder mehr Messstellen, nicht jedoch aller Messstellen, nur die mindestens eine funktionsfähig verbleibende Messstelle verwendet, wobei das Verfahren mindestens ein solches Versagen während des kontinuierlich durchgeführten Strippens umfasst.

In einer **sechsten Ausführungsform** der Erfindung, die mit allen anderen Ausführungsformen, sofern diese nicht wie die fünfte Ausführungsform das Funktionsfähigbleiben mindestens einer Messstelle umfassen, kombiniert werden kann, wird im Falle des Versagens aller Messstellen der letzte vor dem Versagen einer Messstelle aus deren Messwert ermittelte Wert für den der Stripperkolonne gemäß der Regelung von Schritt (ii) zuzuführenden verringerten oder erhöhten Mengenstrom an Strippgas SG1 $\dot{m}_{SG1}$ um 5 % bis 10 % erhöht und beibehalten, bis mindestens eine der Messstellen wieder funktionsfähig ist.

In einer **siebten Ausführungsform** der Erfindung, die mit allen anderen Ausführungsformen kombiniert werden kann, wird in Schritt (i) der Mengenstrom $\dot{m}_{SG1}$ für den zum Zeitpunkt $t_i$ gegebenen Mengenstrom $\dot{m}_{AW1}(t_i)$ so gewählt (wird der Mengenstrom $\dot{m}_{SG1}$ so auf den Mengenstrom $\dot{m}_{AW1}(t_i)$ abgestimmt), dass der Mengenstrom $\dot{m}_{SG1}$ innerhalb eines Wertebereiches liegt, der durch die mathematische Beziehung (0), die dem Soll-Wert $c_{NB,AW2,SOLL}$ entspricht, und die zweite mathematische Beziehung (2) bei dem zum Zeitpunkt $t_i$ gegebenen Mengenstrom $\dot{m}_{AW1}(t_i)$ aufgespannt wird.

In einer **achten Ausführungsform** der Erfindung, die eine Alternative zur siebten Ausführungsform darstellt, wird in Schritt (i) der Mengenstrom $\dot{m}_{SG1}$ für den zum Zeitpunkt $t_i$ gegebenen Mengenstrom $\dot{m}_{AW1}(t_i)$ so gewählt (wird der Mengenstrom $\dot{m}_{SG1}$ so auf den Mengenstrom $\dot{m}_{AW1}(t_i)$ abgestimmt), dass der Mengenstrom $\dot{m}_{SG1}$ innerhalb eines Wertebereiches liegt, der durch die mathematische Beziehung (0), die dem Soll-Wert $c_{NB,AW2,SOLL}$ entspricht, und die erste mathematische Beziehung (1) bei dem zum Zeitpunkt $t_i$ gegebenen Mengenstrom $\dot{m}_{AW1}(t_i)$ aufgespannt wird.

In einer **neunten Ausführungsform** der Erfindung, die eine weitere Alternative zur siebten Ausführungsform darstellt, umfasst die Schar linearer mathematischer Beziehungen eine dritte lineare mathematische Beziehung für einen dritten Wert von $c_{NB,AW2}$, der 99 % des Soll-Werts $c_{NB,AW2,SOLL}$ entspricht, und eine vierte lineare mathematische Beziehung für einen vierten Wert von $c_{NB,AW2}$, der 101 % des Soll-Werts $c_{NB,AW2,SOLL}$ entspricht, wobei in Schritt (i) der Mengenstrom $\dot{m}_{SG1}$ für den zum Zeitpunkt $t_i$ gegebenen Mengenstrom $\dot{m}_{AW1}(t_i)$ so gewählt wird (wobei der Mengenstrom $\dot{m}_{SG1}$ so auf den Mengenstrom $\dot{m}_{AW1}(t_i)$ abgestimmt wird), dass der Mengenstrom $\dot{m}_{SG1}$ innerhalb eines Wertebereiches liegt, der durch dritte mathematische Beziehung und die vierte mathematische Beziehung bei dem zum Zeitpunkt $t_i$ gegebenen Mengenstrom $\dot{m}_{AW1}(t_i)$ aufgespannt wird.

In einer **zehnten Ausführungsform** der Erfindung, die mit allen anderen Ausführungsformen kombiniert werden kann, wird für mindestens zwei Kombinationen an Randbedingungen von (a) $c_{NB,AW1}$, (b) der Temperatur $T_{AW1}$ und (c) der Temperatur $T_{SG1}$ jeweils eine Schar von linearen mathematischen Beziehungen hinterlegt, wobei mindestens die Temperatur $T_{SG1}$ in den mindestens zwei Kombinationen an Randbedingungen verschieden ist.

In einer **elften Ausführungsform** der Erfindung, die mit allen anderen Ausführungsformen kombiniert werden kann, fällt der zu reinigende Abwasserstrom in der Wäsche einer Nitrobenzolphase an, wobei die Nitrobenzolphase durch Nitrierung von Benzol mit Salpetersäure in Gegenwart von Schwefelsäure gefolgt von Abtrennung einer wässrigen Schwefelsäurephase erhalten wird.

In einer **zwölften Ausführungsform** der Erfindung, die eine besondere Ausgestaltung der elften Ausführungsform ist, umfasst die Wäsche der Nitrobenzolphase drei Stufen, wobei in der ersten Stufe mit Wasser, in der zweiten Stufe mit einer wässrigen Basenlösung (insbesondere Natronlauge) und in der dritten Stufe mit Wasser gewaschen wird, wobei in jeder der drei Stufen Abwasser anfällt und mindestens eines davon als Abwasserstrom AW1 in der Stripperkolonne gereinigt wird.

In einer **dreizehnten Ausführungsform** der Erfindung, die eine besondere Ausgestaltung der zwölften Ausführungsform ist, fällt in der dritten Stufe ein Abwasser an, das als Bestandteil eines in der zweiten und/oder ersten Stufe eingesetzten Waschwassers eingesetzt wird, wobei in der ersten und/oder in der zweiten Stufe Abwasser anfällt, das als Abwasserstrom AW1 in der Stripperkolonne gereinigt wird.

In einer **vierzehnten Ausführungsform** der Erfindung, die mit allen anderen Ausführungsformen kombiniert werden kann, liegt der Maximalwert $c_{NB,AW2,MAX}$ im Bereich von 2,0 ppm bis 10 ppm, bezogen auf die Gesamtmasse von AW2.

In einer **fünfzehnten Ausführungsform** der Erfindung, die mit allen anderen Ausführungsformen kombiniert werden kann, wird $c_{NB,AW2}$ kontinuierlich oder in Intervallen von maximal 6 h, bevorzugt maximal 3 h, besonders bevorzugt maximal 1 h gemessen.

Die zuvor kurz geschilderten Ausführungsformen und weitere mögliche Ausgestaltungen der Erfindung werden im Folgenden näher erläutert. Dabei können sämtliche Ausführungsformen und weitere Ausgestaltungen beliebig miteinander kombiniert werden, sofern nicht ausdrücklich etwas anderes gesagt wird oder sich aus dem Zusammenhang eindeutig etwas anderes ergibt.

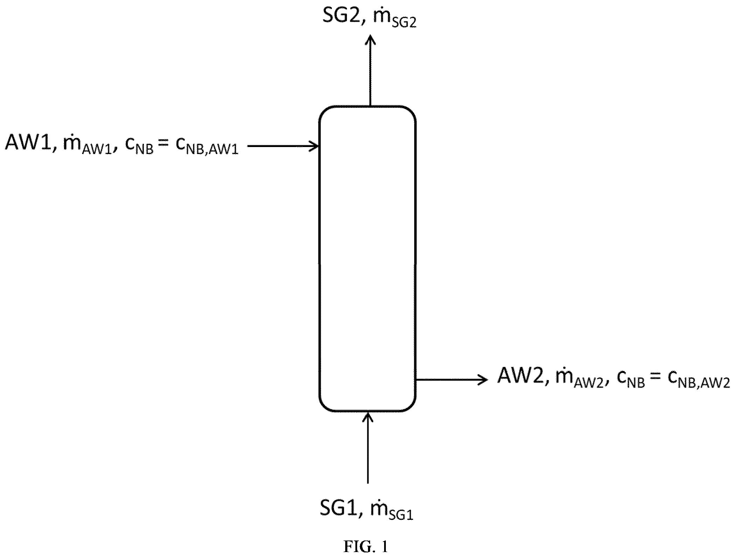

Das eigentliche Strippen des Abwasserstroms AW1 mit einem Strippgas SG1 in **Schritt (I)** kann grundsätzlich erfolgen wie dem Fachmann bekannt. Als Strippgas wird vorzugsweise Wasserdampf und/oder Stickstoff, besonders bevorzugt Wasserdampf, eingesetzt. Der Stripperkolonne wird dabei insbesondere, wie in **FIG. 1** gezeigt, das zu reinigende Abwasser (*AW1* in der Terminologie der vorliegenden Erfindung; Mengenstrom $\dot{m}_{AW1}$, Konzentration an Nitrobenzol, $c_{NB}$, ist $c_{NB,AW1}$) am Kopf zugeführt, und im Gegenstrom wird von unten ein geeignetes Strippgas (*SG1* in der Terminologie der vorliegenden Erfindung; Mengenstrom $\dot{m}_{SG1}$) durch die Stripperkolonne geleitet. Im Sumpf der Kolonne wird das Nitrobenzol abgereicherte Abwasser (*AW2* in der Terminologie der vorliegenden Erfindung; Mengenstrom $\dot{m}_{AW2}$, Konzentration an Nitrobenzol $c_{NB,AW2}$) abgezogen. Am Kopf der Kolonne wird ein mit Nitrobenzol angereicherter Strippgasstrom (*SG2* in der Terminologie der vorliegenden Erfindung) erhalten. Dieser Strom SG2 wird bevorzugt kondensiert und einer weiteren Verwendung zugeführt. Die weitere Verwendung kann dabei stofflicher Art sein, indem das bei der Kondensation erhaltene Kondensat einem chemischen Prozess zugeführt wird. Es ist jedoch auch möglich, das erhaltene Kondensat, dessen Organika-Anteil wesentlich höher ist als der von AW1, zu verbrennen und die freiwerdende Wärmemenge als Energieträger, beispielsweise für Produktionsprozesse, einzusetzen.

Die Konzentration $c_{NB,AW2}$ kann grundsätzlich durch alle dem Fachmann zum Zwecke des Nachweises von Nitrobenzol in wässriger Lösung bekannten Methoden ermittelt werden, insbesondere durch Nahinfrarotspektroskopie oder Gaschromatographie, wobei die Nahinfrarotspektroskopie bevorzugt ist. Im Allgemeinen liefern alle Methoden im Rahmen einer für die Zwecke der vorliegenden Erfindung hinreichenden Genauigkeit übereinstimmende Ergebnisse. Im unwahrscheinlichen Fall einer signifikanten Diskrepanz zwischen verschiedenen Messmethoden ist für die Zwecke der vorliegenden Erfindung der durch Nahinfrarotspektroskopie bestimmte Wert maßgeblich. Die Messung von $c_{NB,AW2}$ erfolgt insbesondere kontinuierlich oder in Intervallen von maximal 6 h, bevorzugt maximal 3 h, besonders bevorzug maximal 1 h.

Es ist möglich, mehr als eine Messstelle, insbesondere (genau) zwei Messstellen, zur Ermittlung der Konzentration $c_{NB,AW2}$ einzusetzen. Der Einsatz von mehr als zwei Messstellen ist zwar in der Regel nicht erforderlich, aber selbstverständlich auch möglich. Die mehreren Messstellen ermitteln unabhängig voneinander Messwerte, aus denen der Mittelwert errechnet und als Wert für $c_{NB,AW2,IST}$ verwendet wird. Dies erhöht zum einen die Genauigkeit und ermöglicht zum anderen den Weiterbetrieb des Verfahrens auch für den Fall, dass eine der Messstellen (nicht alle) störungsbedingt ausfällt. In einem solchen Fall kann dann einfach die mindestens eine funktionsfähig verbleibende Messstelle weiterverwendet werden. Steht tatsächlich nur noch eine einzige Messstelle zur Verfügung, kann für den Zeitraum der Störung selbstredend keine Mittelwertbildung mehr vorgenommen werden.

Steht - unabhängig davon, ob genau eine oder mehrere Messstellen verwendet werden - störungsbedingt zeitweise gar keine Messstelle zur Verfügung, so wird bevorzugt der letzte vor dem Versagen einer Messstelle aus deren Messwert für $c_{NB,AW2}$ ermittelte Wert für den der Stripperkolonne gemäß der Regelung von Schritt (ii) zuzuführenden Mengenstrom an Strippgas SG1 $\dot{m}_{SG1}$ um 5 % bis 10 % erhöht und solange beibehalten, bis mindestens eine der Messstellen wieder funktionsfähig ist und ihre Aufgabe erfüllen kann.

Der für die Einhaltung der angestrebten Reinheit des Abwassers AW2 erforderliche Mengenstrom an Strippgas SG1 ist bei einer gegebenen Stripperkolonne von verschiedenen Faktoren abhängig, wie insbesondere:

1. Größe des Mengenstroms AW1;
2. Konzentration an Nitrobenzol in AW1;
3. Temperatur von AW1;
4. Temperatur des Strippgases SG1.

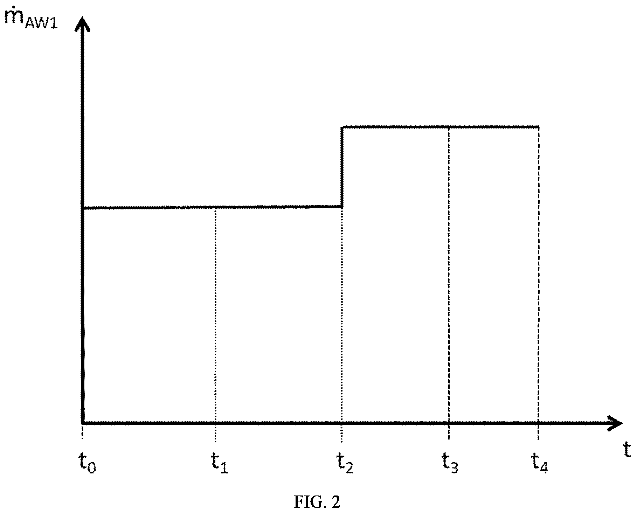

Für einen gegebenen Prozess unterliegen die Faktoren 2 bis 4 im Allgemeinen allenfalls geringen Schwankungen, sodass für die Regelung das Hauptaugenmerk auf die Größe des Mengenstroms AW1 zu legen ist. Änderungen dieses Mengenstroms werden auch als *Lastwechsel* bezeichnet. Ein solcher Lastwechsel ist in **FIG. 2** schematisch dargestellt. Die Abbildung zeigt eine Auftragung des Mengenstroms an Abwasser AW1 über der Zeit t. Betrachtet wird ein Zeitraum von $t_0$ bis $t_4$, innerhalb dessen (bei einem Zeitpunkt $t_2$) der Mengenstrom an AW1, welcher der Abwasserstripperkolonne zugeführt wird, signifikant erhöht wird. Innerhalb des Zeitraums geringer Last ($t_0$ bis $t_2$) ist ein Zeitpunkt $t_1$ hervorgehoben, der später noch näher diskutiert wird. Entsprechendes gilt für den Zeitraum hoher Last ($t_2$ bis $t_4$, dort $t_3$). (Streng genommen beginnt der Zeitraum höherer Last unmittelbar *nach* $t_2$, wenn zum Zeitpunkt $t_2$ die Last schlagartig erhöht wird. Der Einfachheit halber wird der Zeitraum höherer Last in der vorliegenden Diskussion trotzdem als "$t_2$ bis $t_4$," oder "$t_2$-$t_4$" bezeichnet.)

Vor diesem Hintergrund wird im Rahmen der vorliegenden Erfindung die Schar linearer mathematischer Beziehung für *mindestens eine Kombination an gegebenen Randbedingungen von (a) $c_{NB,AW1}$, (b) der Temperatur $T_{AW1}$ und (c) der Temperatur $T_{SG1}$* hinterlegt. Dies bedeutet, dass für mindestens einen Wert für (a) $c_{NB,AW1}$ *in Verbindung mit* einem Wert für (b) $T_{AW1}$ und *in Verbindung mit* einem Wert für (c) $T_{SG1}$ eine Schar linearer mathematischer Beziehungen hinterlegt wird. Sollte es sich in der betrieblichen Praxis herausstellen, dass die Stripperkolonne mit mehreren Wertekombinationen für (a) $c_{NB,AW1}$, (b) $T_{AW1}$ und (c) $T_{SG1}$ sinnvoll betrieben werden kann, so wird vorzugsweise für jede dieser Wertekombinationen eine Schar linearer mathematischer Beziehungen hinterlegt. Dies gilt insbesondere für den Fall, dass die Temperatur des Abwasserstromes veränderlich sein sollte, es also beispielsweise der Fall ist, dass für einen ersten Zeitraum das Abwasser AW1 mit einer ersten Temperatur im Zulauf der Stripperkolonne ankommt und in einem zweiten Zeitraum mit einer zweiten, von der ersten verschiedenen Temperatur. In einem solchen Fall wird einfach auf eine andere Schar linearer mathematischer Beziehungen, die der zweiten Temperatur von AW1 entspricht, zurückgegriffen.

Unter diesen Randbedingungen entspricht also jede lineare mathematische Beziehung der Art $\dot{m}_{SG1} = x \cdot \dot{m}_{AW1}$ einer bestimmten Konzentration an Nitrobenzol im Abwasser, das die Stripperkolonne verlässt, $c_{NB,AW2}$. Anders ausgedrückt: Unter diesen Randbedingungen ist die Abhängigkeit des für die Reinigung des Abwassers AW1 erforderlichen Mengenstroms an Strippgas von der eingetragenen Menge an Abwasser AW1 linear, wobei die Steigung der Geraden dem Faktor x in der linearen mathematischen Beziehung $\dot{m}_{SG1}$ = x • $\dot{m}_{AW1}$ entspricht. Auf diese Weise ist es möglich, eine Schar solcher linearer mathematischer Beziehungen aufzustellen, die *einem Bereich* an Konzentrationen $c_{NB,AW2}$ entspricht.

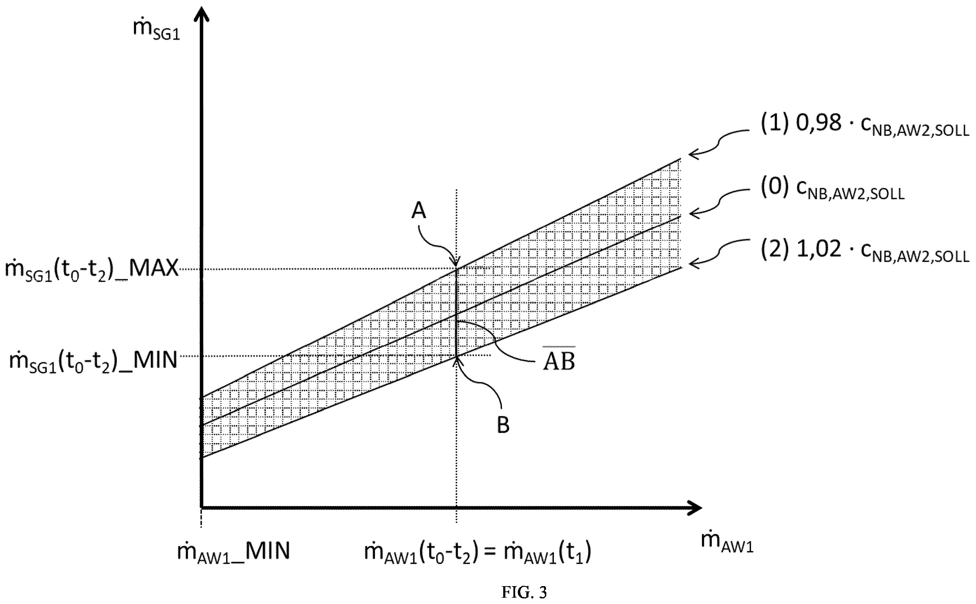

**FIG. 3** zeigt eine schematische Darstellung einer typischen Abhängigkeit des erforderlichen Mengenstroms an Strippgas SG1 von dem der Stripperkolonne zugeführten Mengenstrom an Abwasser AW1. Darin bezeichnet $\dot{m}_{AW1\_MIN}$ den minimalen Abwassermengenstrom, mit dem die Stripperkolonne noch sinnvoll betrieben werden kann. Der Abwassermengenstrom, der zum Zeitpunkt $t_1$ (vgl. FIG. 2) in die Stripperkolonne geführt wird ($\dot{m}_{AW1}(t_1)$) ist eingezeichnet. Da der Mengenstrom an AW1 von $t_0$ bis $t_2$ ($\dot{m}_{AW1}(t_0\text{-}t_2)$) konstant ist, gilt $\dot{m}_{AW1}(t_1)$ = $\dot{m}_{AW1}(t_0\text{-}t_2)$.

Die für die Erstellung einer solchen Grafik erforderlichen Daten können leicht durch betriebliche Erfahrungswerte (Vorversuche bei den gewählten Randbedingungen von (a) $c_{NB,AW1}$, (b) $T_{AW1}$ und (c) $T_{SG1}$) und/oder dem Fachmann bekannte ingenieurtechnische Berechnungen gewonnen werden. Die Abhängigkeit ist linear, d. h. die Funktion $\dot{m}_{SG1}$ ($\dot{m}_{AW1}$) ist eine Gerade, deren Steigung dem Wert x in der linearen mathematischen Beziehung entspricht. Erfindungsgemäß umfasst die Schar linearer mathematischer Beziehungen mindestens die drei in FIG. 1 mit (0), (1) und (2) bezeichneten Geraden.

- Die mit (0) bezeichnete Gerade entspricht dabei solchen Werten von $\dot{m}_{SG1}$, die bei den entsprechenden Werten von $\dot{m}_{AW1}$ (unter den gegebenen Randbedingungen) zu einem Gehalt an organischen Verbindungen im die Stripperkolonne verlassenden Abwasser AW2 führen, der dem angestrebten Soll-Wert entspricht.
- Die mit (1) bezeichnete Gerade entspricht dabei solchen Werten von $\dot{m}_{SG1}$, die bei den entsprechenden Werten von $\dot{m}_{AW1}$ (unter den gegebenen Randbedingungen) zu einem Gehalt an organischen Verbindungen im die Stripperkolonne verlassenden Abwasser AW2 führen, der 2 % unter dem angestrebten Soll-Wert liegt.
- Die mit (2) bezeichnete Gerade entspricht dabei solchen Werten von $\dot{m}_{SG1}$, die bei den entsprechenden Werten von $\dot{m}_{AW1}$ (unter den gegebenen Randbedingungen) zu einem Gehalt an organischen Verbindungen im die Stripperkolonne verlassenden Abwasser AW2 führen, der 2 % über dem angestrebten Soll-Wert liegt.

Die Geraden (1) und (2) spannen einen Kegelstumpf auf, der durch die Schraffierung angedeutet ist.

Das Wissen, das einer Grafik wie der in FIG. 3 Gezeigten zugrundeliegt, wird also im Rahmen der vorliegenden Erfindung als *Schar linearer mathematischer Beziehungen* in einer *Datenbasis* hinterlegt. Die Datenbasis ihrerseits wird in ein Prozessleitsystem, das die Stripperkolonne führt, eingebunden.

Es sei nun der Zeitpunkt t = $t_1$ betrachtet: Der Mengenstrom an Strippgas SG1 kann im Bereich $\dot{m}_{SG1}(t_0\text{-}t_2)\_MIN$ bis $\dot{m}_{SG1}(t_0\text{-}t_2)\_MAX$ gewählt werden. Diese beiden Werte bezeichnen den minimalen ($\dot{m}_{SG1}(t_0\text{-}t_2)\_MIN$) bzw. maximalen ($\dot{m}_{SG1}(t_0\text{-}t_2)\_MAX$) Mengenstrom an Strippgas, mit welchem bei der Abwassermenge $\dot{m}_{AW1}(t_1)$ = $\dot{m}_{AW1}(t_0\text{-}t_2)$ die Konzentration an Nitrobenzol im Abwasser AW2 gemäß dem in der Datenbasis hinterlegten Wissen in einem Bereich von $\pm$ 2 % um den Soll-Wert gehalten werden kann. Auf diese Weise werden für den Zeitpunkt $t_1$ die Endpunkte A und B eines Wertebereiches $\overline{AB}$ definiert, innerhalb dessen $\dot{m}_{SG1}$ zum Zeitpunkt $t_1$ (allgemein gesprochen: zum Zeitpunkt $t_i$) gewählt werden kann. Dies ist mit der erfindungsgemäßen Forderung, wonach *der Mengenstrom $\dot{m}_{SG1}$ für einen zu einem Zeitpunkt $t_i$ gegebenen Mengenstrom $\dot{m}_{AW1}(t_i)$ so gewählt wird (wobei der Mengenstrom $\dot{m}_{SG1}$ so auf den Mengenstrom $\dot{m}_{AW1}(t_i)$ abgestimmt wird), dass der Mengenstrom $\dot{m}_{SG1}$ innerhalb eines Wertebereiches ($\overline{AB}$) liegt, der durch die erste mathematische Beziehung (1) und die zweite mathematische Beziehung (2) bei dem zum Zeitpunkt $t_i$ gegebenen Mengenstrom $\dot{m}_{AW1}(t_i)$ aufgespannt wird,* gemeint.

- Der Mengenstrom $\dot{m}_{AW1}(t_i)$ kann so gewählt werden, dass die eingetragene Strippgasmenge tendenziell zu hoch ist (sich also im oberen Bereich des Kegelstumpfes aus FIG. 3 bewegt), was zur Folge hat, dass die Regelung gemäß Schritt (ii) tendenziell eher eine Erniedrigung des Mengenstroms an SG1 umfasst.
- Der Mengenstrom $\dot{m}_{AW1}(t_i)$ kann jedoch auch so gewählt werden, dass die eingetragene Strippgasmenge tendenziell zu niedrig ist (sich also im unteren Bereich des Kegelstumpfes aus FIG. 3 bewegt), was zur Folge hat, dass die Regelung gemäß Schritt (ii) tendenziell eher eine Erhöhung des Mengenstroms an SG1 umfasst.
- Schließlich kann der Mengenstrom $\dot{m}_{AW1}(t_i)$ auch so gewählt werden, dass sich die eingetragene Strippgasmenge in einem Bereich ober- und unterhalb der idealen Geraden (0) bewegt, sich also in einem mittleren Bereich des Kegelstumpfes aus FIG. 3 bewegt, was zur Folge hat, dass die Regelung gemäß Schritt (ii) tendenziell eine Erniedrigung oder eine Erhöhung des Mengenstroms an SG1 umfasst, je nach Ergebnis der kontinuierlich oder in Intervallen durchgeführten Messungen.

Unter dem Gesichtspunkt der Bedienerfreundlichkeit sind die ersten beiden Möglichkeiten bevorzugt.

Es versteht sich von selbst, dass die vorhandenen apparatetechnischen Randbedingungen beachtet werden müssen. So wird es etwa regelmäßig der Fall sein, dass die Strippgasmenge an SG1 im Rahmen der Regelung gemäß Schritt (ii) nicht beliebig stark variiert werden kann, sondern nur in einem bestimmten gegebenen Rahmen, zum Beispiel um maximal 20 %. Dem ist bei der Wahl des Mengenstroms $\dot{m}_{AW1}(t_i)$ gemäß Schritt (i) Rechnung zu tragen, d. h. der

Mengenstrom $\dot{m}_{AW1}(t_i)$ muss so gewählt werden, dass ein zu befürchtendes Ausreißen aus dem Korridor von $\pm$ 2 % um den Soll-Wert für die Konzentration an Nitrobenzol in AW2 auch ausgeglichen werden kann. Dies hat beispielsweise zur Folge, dass etwa bei Verwendung der zweiten der zuvor genannten Möglichkeiten der Mengenstrom $\dot{m}_{AW1}(t_i)$ in Schritt (i) so gewählt werden muss, dass - für das genannte Beispiel der Begrenzung der Veränderlichkeit des Strippgasmengenstroms um bis zu 20 % - in Schritt (ii) eine Steigerung des Mengenstroms an SG1 um bis zu 20 % auch tatsächlich ausreicht, um die erforderliche Korrektur zu gewährleisten.

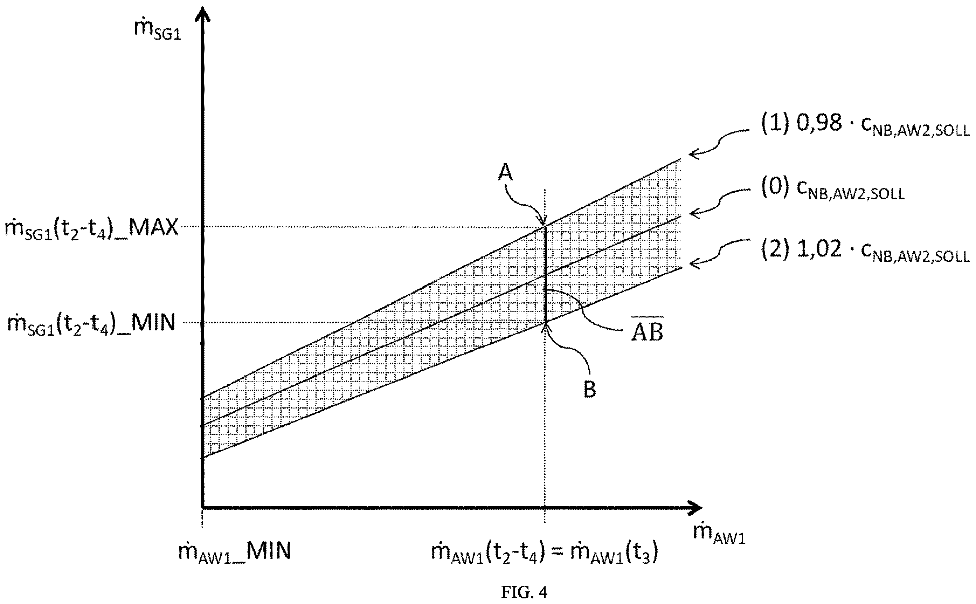

FIG. 4 ist eine zu FIG. 3 analoge Darstellung für den Zeitpunkt $t_3$, der im Zeitraum höherer Last ($t_2$ bis $t_4$) liegt. Der dem Zeitpunkt $t_3$ entsprechende Mengenstrom an Abwasser ist als $\dot{m}_{AW1}(t_3)$ eingezeichnet. Da der Mengenstrom an Abwasser AW1 im Zeitraum $t_2$ bis $t_4$ konstant ist, gilt in Analogie zu FIG. 3 $\dot{m}_{AW1}(t_3) = \dot{m}_{AW1}(t_2\text{-}t_4)$. Auch hier gibt es dem Wert für $\dot{m}_{AW1}(t_3)$ entsprechende Minimal- $(\dot{m}_{SG1}(t_2\text{-}t_4)\_MIN)$ und Maximalwerte $(\dot{m}_{SG1}(t_2\text{-}t_4)\_MAX)$ für den Strippgasmengenstrom (Wertebereich $\overline{AB}$).

Das erfindungsgemäße Verfahren eignet sich für die Reinigung von wässrigen Abwasserströmen aus einem Verfahren zur Herstellung von Nitrobenzol durch Nitrierung von Benzol mit Salpetersäure in Gegenwart von Schwefelsäure. Benzol wird dabei, insbesondere in den heute gebräuchlichen adiabatisch betriebenen Nitrierverfahren, üblicherweise in stöchiometrischem Überschuss gegenüber Salpetersäure eingesetzt, sodass es im Rahmen der Aufarbeitung des Nitrierproduktes abgetrennt werden muss. Die Aufarbeitung des Nitrierproduktes geschieht dabei üblicherweise, in dem das nach erfolgter Nitrierung vorliegende Reaktionsgemisch (Nitrierprodukt) enthaltend Nitrobenzol, nicht umgesetztes Benzol und Schwefelsäure in einem ersten Schritt in eine wässrige Schwefelsäurephase und eine organische Nitrobenzolphase getrennt wird, gefolgt von einem zweiten Schritt einer ein- oder mehrstufigen Wäsche der Nitrobenzolphase, woran sich ein dritter Schritt anschließt, in welchem das überschüssige Benzol aus der gewaschenen Nitrobenzolphase abgetrennt wird. Das überschüssige Benzol wird üblicherweise in die Nitrierung rezykliert.

Der zweite Schritt der Wäsche umfasst bevorzugt drei Stufen, eine sog. *saure Wäsche,* eine sog. *alkalische Wäsche* und eine sog. *neutrale Wäsche*. In der ersten Stufe wird die in der Phasentrennung erhaltene Nitrobenzolphase mit Wasser gewaschen, um mitgerissene bzw. gelöste Säurereste so weit wie möglich auszuwaschen. In der zweiten Stufe wird das nach Trennung der Phasen erhaltene organische Waschprodukt der ersten Stufe mit einer wässrigen Basenlösung, insbesondere Natronlauge, gewaschen, um noch im Nitrobenzol verbliebene Säurereste zu neutralisieren. In der dritte Stufe wird schließlich das nach Trennung der Phasen erhaltene organische Waschprodukt der zweiten Stufe mit Wasser gewaschen. In jeder Stufe fällt nach Trennung der Phasen neben dem jeweiligen organischen Waschprodukt auch Abwasser an, dass das Abwasserstrom AW1 erfindungsgemäß gereinigt werden kann.

Bevorzugt erfolgt die Wäsche im Gegenstrom derart, dass das in der dritten Stufe erhaltene Abwasser in der Wäsche der zweiten und/oder der ersten Stufe als Bestandteil der Waschflüssigkeit eingesetzt wird. Das erfindungsgemäße Verfahren ist besonders dazu geeignet, die in der ersten und/oder zweiten Stufe anfallenden Abwässer zu reinigen.

Wie bereits eingangs erwähnt, dient das erfindungsgemäße Reinigungsverfahren zur Vorreinigung des Abwasserstroms AW1 derart, dass der erhaltene Abwasserstrom AW2 einer (insbesondere biologischen) Abwasseraufbereitungsanlage zugeführt werden kann, und zwar unter Einhaltung der vom Betreiber derselben vorgegebenen Reinheitsanforderungen an den Abwasserstrom AW2. Die vorliegende Erfindung bietet hierbei den Vorteil es zu ermöglichen, die Stripperkolonne so zu regeln, dass der Gehalt an Nitrobenzol im Abwasser AW2 nicht notwendigerweise immer minimal, dafür aber relativ konstant und dabei stets hinreichend weit unterhalb der Spezifikationsgrenze des Betreibers der Abwasseraufbereitungsanlage liegt. Dabei liegt der vom Betreiber der Abwasseraufbereitungsanlage vorgegebene Maximalwert $c_{NB,AW2,MAX}$ beispielsweise im Bereich von 2,0 ppm bis 10 ppm, bezogen auf die Gesamtmasse von AW2.

Die vorstehend beschriebene Erfindung zeichnet sich durch eine Optimierung des Dampfverbrauchs aus und erhöht die Bedienerfreundlichkeit.


## Patentansprüche

**1.** Verfahren zum Reinigen eines mit Nitrobenzol verunreinigten Abwasserstroms AW1, der Nitrobenzol in einer Konzentration $c_{NB,AW1}$ enthält, umfassend:

(I) Strippen des Abwasserstroms AW1 mit einem Strippgas SG1 in einer kontinuierlich betriebenen Stripperkolonne unter Erhalt eines Abwasserstroms AW2, der Nitrobenzol in einer Konzentration $c_{NB,AW2} < c_{NB,AW1}$ enthält und eines mit Nitrobenzol beladenen Strippgasstroms SG2, wobei der Abwasserstrom AW1 der Stripperkolonne mit einem Mengenstrom $\dot{m}_{AW1}$ und einer Temperatur $T_{AW1}$ und das Strippgas SG1 der Stripperkolonne mit einem Mengenstrom $\dot{m}_{SG1}$ und einer Temperatur $T_{SG1}$ zugeführt werden und wobei die Konzentration an Nitrobenzol im Abwasserstrom AW2 $c_{NB,AW2}$ kontinuierlich oder Intervallen an einer Messstelle gemessen wird; und
(II) Reinigen des Abwasserstroms AW2 in einer Abwasseraufbereitungsanlage unter Erhalt eines gereinigten Abwasserstroms AW3, der Nitrobenzol in einer Konzentration $c_{NB,AW3} < c_{NB,AW2}$ enthält,
wobei die Konzentration an Nitrobenzol in dem der Abwasseraufbereitungsanlage zugeführten Abwasserstrom AW2 einen vorgegebenen Maximalwert $c_{NB,AW2,MAX}$ nicht überschreiten darf und für die Konzentration an Nitrobenzol im Abwasserstrom AW2 $c_{NB,AW2}$ ein Soll-Wert $c_{NB,AW2,SOLL}$ festgelegt wird, der größer als null ist und auf einen Wert innerhalb eines durch die Bedingung

$$0{,}50 \cdot c_{NB,AW2,MAX} \leq c_{NB,AW2,SOLL} \leq 0{,}95 \cdot c_{NB,AW2,MAX}$$

definierten Zielbereichs festgelegt wird;

wobei der Betrieb der Stripperkolonne umfasst:

(i) Kontinuierliches Zuführen des Strippgases SG1 und des Abwasserstroms AW1 in die Stripperkolonne, wobei in einer Datenbasis für mindestens eine Kombination an Randbedingungen von (a) $c_{NB,AW1}$, (b) der Temperatur $T_{AW1}$ und (c) der Temperatur $T_{SG1}$ eine Schar von linearen mathematischen Beziehungen der Art

$$\dot{m}_{SG1} = x \cdot \dot{m}_{AW1}$$

hinterlegt ist, von denen jede einer Konzentration $c_{NB,AW2}$ entspricht, sodass die Schar von linearen mathematischen Beziehungen einen Bereich an Konzentrationen $c_{NB,AW2}$ definiert, wobei die Schar linearer mathematischer Beziehungen neben einer mathematischen Beziehung (0), die dem Soll-Wert $c_{NB,AW2,SOLL}$ entspricht, mindestens noch eine erste lineare mathematische Beziehung (1) für einen ersten Wert von $c_{NB,AW2}$, der 98 % des Soll-Werts $c_{NB,AW2,SOLL}$ entspricht, und eine zweite lineare mathematische Beziehung (2) für einen zweiten Wert von $c_{NB,AW2}$, der 102 % des Soll-Werts $c_{NB,AW2,SOLL}$ entspricht, umfasst, und wobei der Mengenstrom $\dot{m}_{SG1}$ für einen zu einem Zeitpunkt $t_i$ gegebenen Mengenstrom $\dot{m}_{AW1}(t_i)$ so gewählt wird, dass der Mengenstrom $\dot{m}_{SG1}$ innerhalb eines Wertebereiches ($\overline{AB}$) liegt, der durch die erste mathematische Beziehung (1) und die zweite mathematische Beziehung (2) bei dem zum Zeitpunkt $t_i$ gegebenen Mengenstrom $\dot{m}_{AW1}(t_i)$ aufgespannt wird;

(ii) Regeln der Konzentration $c_{NB,AW2}$,

indem bei einer an der Messstelle gemessenen Ist-Konzentration $c_{NB,AW2,IST}$ an Nitrobenzol im Abwasser AW2, die gleich oder kleiner ist als $0{,}98 \cdot c_{NB,AW2,SOLL}$, der Mengenstrom an Strippgas SG1 $\dot{m}_{SG1}$ verringert wird,
und indem bei einer an der Messstelle gemessenen IST-Konzentration $c_{NB,AW2,IST}$ an Nitrobenzol im Abwasser AW2, die gleich oder größer ist als $1{,}02 \cdot c_{NB,AW2,SOLL}$, der Mengenstrom an Strippgas SG1 $\dot{m}_{SG1}$ erhöht wird.

2. Verfahren nach Anspruch 1, bei welchem als Strippgas Wasserdampf und/oder Stickstoff eingesetzt wird.

3. Verfahren nach einem der vorstehenden Ansprüche, bei welchem an zwei oder mehr Messstellen unabhängig voneinander ein Wert für $c_{NB,AW2}$ ermittelt und aus den erhaltenen Messwerten der Mittelwert gebildet wird, welcher als Wert für $c_{NB,AW2,IST}$ verwendet wird.

4. Verfahren nach Anspruch 3, bei welchem im Falle des Versagens einer oder mehr der zwei oder mehr Messstellen, nicht jedoch aller Messstellen, nur die mindestens eine funktionsfähig verbleibende Messstelle verwendet wird, wobei das Verfahren mindestens ein solches Versagen während des kontinuierlich durchgeführten Strippens umfasst.

5. Verfahren nach einem der Ansprüche 1 bis 3, bei welchem im Falle des Versagens aller Messstellen der letzte vor dem Versagen einer Messstelle aus deren Messwert ermittelte Wert für den der Stripperkolonne gemäß der Regelung von Schritt (ii) zuzuführenden verringerten oder erhöhten Mengenstrom an Strippgas SG1 $\dot{m}_{SG1}$ um 5 % bis 10 % erhöht und beibehalten wird, bis mindestens eine der Messstellen wieder funktionsfähig ist.

6. Verfahren nach einem der vorstehenden Ansprüche, bei welchem in Schritt (i) der der Mengenstrom $\dot{m}_{SG1}$ für den zum Zeitpunkt $t_i$ gegebenen Mengenstrom $\dot{m}_{AW1}(t_i)$ so gewählt wird, dass der Mengenstrom $\dot{m}_{SG1}$ innerhalb eines Wertebereiches liegt, der durch die mathematische Beziehung (0), die dem Soll-Wert $c_{NB,AW2,SOLL}$ entspricht, und die zweite mathematische Beziehung (2) bei dem zum Zeitpunkt $t_i$ gegebenen Mengenstrom $\dot{m}_{AW1}(t_i)$ aufge-

spannt wird,

7. Verfahren nach einem der Ansprüche 1 bis 5, bei welchem in Schritt (i) der Mengenstrom $\dot{m}_{SG1}$ für den zum Zeitpunkt $t_i$ gegebenen Mengenstrom $\dot{m}_{AW1}(t_i)$ so gewählt wird, dass der Mengenstrom $\dot{m}_{SG1}$ innerhalb eines Wertebereiches liegt, der durch die mathematische Beziehung (0), die dem Soll-Wert $c_{NB,AW2,SOLL}$ entspricht, und die erste mathematische Beziehung (1) bei dem zum Zeitpunkt $t_i$ gegebenen Mengenstrom $\dot{m}_{AW1}(t_i)$ aufgespannt wird.

8. Verfahren nach einem der Ansprüche 1 bis 5, bei welchem die Schar linearer mathematischer Beziehungen eine dritte lineare mathematische Beziehung für einen dritten Wert von $c_{NB,AW2}$, der 99 % des Soll-Werts $c_{NB,AW2,SOLL}$ entspricht, und eine vierte lineare mathematische Beziehung für einen vierten Wert von $c_{NB,AW2}$, der 101 % des Soll-Werts $c_{NB,AW2,SOLL}$ entspricht, umfasst, und wobei in Schritt (i) der Mengenstrom $\dot{m}_{SG1}$ für den zum Zeitpunkt $t_i$ gegebenen Mengenstrom $\dot{m}_{AW1}(t_i)$ so gewählt wird, dass der Mengenstrom $\dot{m}_{SG1}$ innerhalb eines Wertebereiches liegt, der durch dritte mathematische Beziehung und die vierte mathematische Beziehung bei dem zum Zeitpunkt $t_i$ gegebenen Mengenstrom $\dot{m}_{AW1}(t_i)$ aufgespannt wird.

9. Verfahren nach einem der vorstehenden Ansprüche, bei welchem für mindestens zwei Kombinationen an Randbedingungen von (a) $c_{NB,AW1}$, (b) der Temperatur $T_{AW1}$ und (c) der Temperatur $T_{SG1}$ jeweils eine Schar von linearen mathematischen Beziehungen hinterlegt ist, wobei mindestens die Temperatur $T_{SG1}$ in den mindestens zwei Kombinationen an Randbedingungen verschieden ist.

10. Verfahren nach einem der vorstehenden Ansprüche, bei welchem der zu reinigende Abwasserstrom in der Wäsche einer Nitrobenzolphase anfällt, wobei die Nitrobenzolphase durch Nitrierung von Benzol mit Salpetersäure in Gegenwart von Schwefelsäure gefolgt von Abtrennung einer wässrigen Schwefelsäurephase erhalten wird.

11. Verfahren nach Anspruch 10, bei welchem die Wäsche der Nitrobenzolphase drei Stufen umfasst, wobei in der ersten Stufe mit Wasser, in der zweiten Stufe mit einer wässrigen Basenlösung und in der dritten Stufe mit Wasser gewaschen wird, wobei in jeder der drei Stufen Abwasser anfällt und mindestens eines davon als Abwasserstrom AW1 in der Stripperkolonne gereinigt wird.

12. Verfahren nach einem der vorstehenden Ansprüche, bei welchem der Maximalwert $c_{NB,AW2,MAX}$ im Bereich von 2,0 ppm bis 10 ppm, bezogen auf die Gesamtmasse des Abwasserstroms AW2, liegt.

13. Verfahren nach einem der vorstehenden Ansprüche, bei welchem $c_{NB,AW2}$ kontinuierlich oder in Intervallen von maximal 6 h gemessen wird.

**Claims**

1. Process for purifying a wastewater stream WW1 contaminated with nitrobenzene which contains nitrobenzene in a concentration $c_{NB,WW1}$, comprising:

   (I) stripping the wastewater stream WW1 with a stripping gas SG1 in a continuously operated stripping column to obtain a wastewater stream WW2 which contains nitrobenzene in a concentration $c_{NB,WW2} < c_{NB,WW1}$ and a stripping gas stream SG2 laden with nitrobenzene, wherein the wastewater stream WW1 is supplied to the stripping column at a flow rate $\dot{m}_{WW1}$ and a temperature $T_{WW1}$ and the stripping gas SG1 is supplied to the stripping column at a flow rate $\dot{m}_{SG1}$ and a temperature $T_{SG1}$, and wherein the concentration of nitrobenzene in the wastewater stream WW2 $c_{NB,WW2}$ is measured at a measuring point continuously or at intervals; and
   (II) purifying the wastewater stream WW2 in a wastewater treatment plant to obtain a purified wastewater stream WW3 which contains nitrobenzene in a concentration $c_{NB,WW3} < c_{NB,WW2}$,

   wherein the concentration of nitrobenzene in the wastewater stream WW2 supplied to the wastewater treatment plant must not exceed a predetermined maximum value $c_{NB,WW2,MAX}$ and a target value $c_{NB,WW2,TARGET}$ is specified for the concentration of nitrobenzene in the wastewater stream WW2 $c_{NB,WW2}$ which is greater than zero and is specified to a value within a target range defined by the condition

$$0.50 \cdot c_{NB,WW2,MAX} \leq c_{NB,WW2,TARGET} \leq 0.95 \cdot c_{NB,WW2,MAX};$$

wherein the operation of the stripping column comprises:

(i) continuously supplying the stripping gas SG1 and the wastewater stream WW1 to the stripping column, wherein for at least one combination of boundary conditions (a) $c_{NB,WW1}$, (b) the temperature $T_{WW1}$, and (c) the temperature $T_{SG1}$, a set of linear mathematical relationships of the type

$$\dot{m}_{SG1} = x \cdot \dot{m}_{WW1}$$

is stored in a database, each of which linear mathematical relationships corresponds to a concentration $c_{NB,WW2}$, so that the set of linear mathematical relationships defines a range of concentrations $c_{NB,WW2}$, wherein the set of linear mathematical relationships comprises, in addition to a mathematical relationship (0) which corresponds to the target value $c_{NB,WW2,TARGET}$, at least a first linear mathematical relationship (1) for a first value of $c_{NB,WW2}$, which corresponds to 98% of the target value $c_{NB,WW2,TARGET}$, and a second linear mathematical relationship (2) for a second value of $c_{NB,WW2}$, which corresponds to 102% of the target value $c_{NB,\,WW2,\,TARGET}$,

and wherein the flow rate $\dot{m}_{SG1}$ is selected for a flow rate $\dot{m}_{WW1}\,(t_i)$ occurring at a time $t_i$ in such a way that the flow rate $\dot{m}_{SG1}$ is within a range of values $(\overline{AB})$ that is generated by the first mathematical relationship (1) and the second mathematical relationship (2) at the flow rate $\dot{m}_{WW1}\,(t_i)$ occurring at the time $t_i$;

(ii) controlling the concentration $c_{NB,WW2}$

by reducing the flow rate of stripping gas SG1 $\dot{m}_{SG1}$ in the event that an actual concentration $c_{NB,WW2,ACTUAL}$ of nitrobenzene in the wastewater WW2 measured at the measuring point is equal to or less than $0.98 \cdot c_{NB,\,WW2,TARGET}$ and by increasing the flow rate of stripping gas SG1 $\dot{m}_{SG1}$ in the event that an actual concentration $c_{NB,WW2,ACTUAL}$ of nitrobenzene in the wastewater WW2 measured at the measuring point is equal to or less than $1.02 \cdot c_{NB,WW2,TARGET}$.

2. Process according to Claim 1, wherein steam and/or nitrogen is used as the stripping gas.

3. Process according to either of the preceding claims, wherein a value for $c_{NB,WW2}$ is determined independently at two or more measuring points and the obtained measured values are used to form an average which is used as the value for $c_{NB,WW2,ACTUAL}$.

4. Process according to Claim 3, wherein in the event of failure of one or more of the two or more measuring points, but not of all of the measuring points, only the at least one measuring point remaining functional is used, wherein the process comprises at least one such failure during the continuously performed stripping.

5. Process according to any of Claims 1 to 3, wherein in the event of failure of all measuring points, the last value for the reduced or increased flow rate of stripping gas SG1 $\dot{m}_{SG1}$ to be supplied to the stripping column according to the controlling of step (ii) that was determined from the measured value of a measuring point before its failure, is increased by 5% to 10% and maintained until at least one of the measuring points is functional again.

6. Process according to any of the preceding claims, wherein in step (i) the flow rate $\dot{m}_{SG1}$ is selected for the flow rate $\dot{m}_{WW1}\,(t_i)$ occurring at the time $t_i$ in such a way that the flow rate $\dot{m}_{SG1}$ is within a range of values that is generated by the mathematical relationship (0), which corresponds to the target value $c_{NB,WW2,TARGET}$, and the second mathematical relationship (2) at the flow rate $\dot{m}_{WW1}\,(t_i)$ occurring at the time $t_i$.

7. Process according to any of Claims 1 to 5, wherein in step (i) the flow rate $\dot{m}_{SG1}$ is selected for the flow rate $\dot{m}_{WW1}\,(t_i)$ occurring at the time $t_i$ in such a way that the flow rate $\dot{m}_{SG1}$ is within a range of values that is generated by the mathematical relationship (0), which corresponds to the target value $c_{NB,WW2,TARGET}$, and the first mathematical relationship (1) at the flow rate $\dot{m}_{WW1}\,(t_i)$ occurring at the time $t_i$.

8. Process according to any of Claims 1 to 5, wherein the set of linear mathematical relationships includes a third linear mathematical relationship for a third value of $c_{NB,WW2}$, which corresponds to 99% of the target value $c_{NB,WW2,TARGET}$, and a fourth linear mathematical relationship for a fourth value of $c_{NB,WW2}$, which corresponds to 101% of the target value $c_{NB,WW2,TARGET}$, wherein in step (i) the flow rate $\dot{m}_{SG1}$ is selected for the flow rate $\dot{m}_{WW1}\,(t_i)$ occurring at the time $t_i$ in such a way that the flow rate $\dot{m}_{SG1}$ is within a range of values that is generated by the third mathematical relationship and the fourth mathematical relationship at the flow rate $\dot{m}_{WW1}$ ($t_i$) occurring at the time $t_i$.

9. Process according to any of the preceding claims, wherein a set of linear mathematical relationships is stored for each of at least two combinations of boundary conditions of (a) $c_{NB,WW1}$, (b) the temperature $T_{WW1}$ and (c) the temperature $T_{SG1}$, wherein at least the temperature $T_{SG1}$ differs in the at least two combinations of boundary conditions.

10. Process according to any of the preceding claims, wherein the wastewater stream to be purified is obtained in the washing of a nitrobenzene phase, wherein the nitrobenzene phase is obtained by nitration of benzene with nitric acid in the presence of sulfuric acid followed by separation of an aqueous sulfuric acid phase.

11. Process according to Claim 10, wherein the washing of the nitrobenzene phase comprises three stages, wherein the first stage comprises washing with water, the second stage comprises washing with an aqueous base solution and the third stage comprises washing with water, wherein wastewater is generated in each of the three stages and at least one of these is purified in the stripping column as wastewater stream WW1.

12. Process according to any of the preceding claims, wherein the maximum value $c_{NB,WW2,MAX}$ is in the range from 2.0 ppm to 10 ppm based on the total mass of the wastewater stream WW2.

13. Process according to any of the preceding claims, wherein $c_{NB,WW2}$ is measured continuously or at intervals of not more than 6 h.


**Revendications**

1. Procédé de purification d'un flux d'eaux usées AW1 contaminé par du nitrobenzène, qui contient du nitrobenzène en une concentration $c_{NB,AW1}$, comprenant :

(I) stripage du flux d'eaux usées AW1 à l'aide d'un gaz de stripage SG1 dans une colonne de stripage fonctionnant en continu avec obtention d'un flux d'eaux usées AW2, qui contient du nitrobenzène en une concentration $c_{NB,AW2} < c_{NB,AW1}$ et d'un flux de gaz de stripage SG2 chargé de nitrobenzène, le flux d'eaux usées AW1 étant introduit dans la colonne de stripage à un flux massique $\dot{m}_{AW1}$ et à une température $T_{AW1}$ et le gaz de stripage SG1 de la colonne de stripage étant introduit dans la colonne de stripage à un flux massique $\dot{m}_{SG1}$ et à une température $T_{SG1}$ et la concentration en nitrobenzène $c_{NB,AW2}$ dans le flux d'eaux usées AW2 étant mesuré en continu ou par intervalles en un site de mesure ; et

(II) purification du flux d'eaux usées AW2 dans une installation de traitement d'eaux usées avec obtention d'un flux d'eaux usées purifié AW3, qui contient du nitrobenzène en une concentration $c_{NB,AW3} < c_{NB,AW2}$,

la concentration en nitrobenzène dans le flux d'eaux usées AW2 introduit dans l'installation de traitement d'eaux usées ne pouvant pas dépasser pas une valeur maximale $c_{NB,AW2,MAX}$ spécifiée et une valeur de consigne $c_{NB,AW2,SOLL}$ étant fixée pour la concentration en nitrobenzène $c_{NB,AW2}$ dans le flux d'eaux usées AW2, laquelle valeur de consigne est supérieure à zéro et fixée à une valeur dans une plage cible définie par la condition

$$0{,}50 \cdot c_{NB,AW2,MAX} \leq c_{NB,AW2,SOLL} \leq 0{,}95 \cdot c_{NB,AW2,MAX}$$

;
le fonctionnement de la colonne de stripage comprenant :

(i) introduction continue du gaz de stripage SG1 et du flux d'eaux usées AW1 dans la colonne de stripage, une base de données contenant, pour au moins une combinaison de conditions limites de (a) $c_{NB,AW1}$, de (b) la température $T_{AW1}$ et de (c) la température $T_{SG1}$, une foule de relations mathématiques linéaires du type

$$\dot{m}_{SG1} = x \cdot \dot{m}_{AW1}$$

dont chacune correspond à une concentration $c_{NB,AW2}$, de telle sorte que la foule de relations mathématiques linéaires définit une plage de concentrations $c_{NB,AW2}$, la foule de relations mathématiques linéaires comprenant, outre une relation mathématique (0), qui correspond à la valeur de consigne $c_{NB,AW2,SOLL}$, en outre encore au moins une autre relation mathématique linéaire (1) pour une première valeur de $c_{NB,AW2}$, qui correspond à 98% de la valeur de consigne $c_{NB,AW2,SOLL}$, et une deuxième relation mathématique linéaire (2) pour une deuxième valeur de $c_{NB,AW2}$, qui correspond à 102% de la valeur de consigne $c_{NB,AW2,SOLL}$,

et le flux massique $\dot{m}_{SG1}$ pour un flux massique $\dot{m}_{AW1}(t_i)$ donné à un instant $t_i$ étant choisi de telle sorte que le flux massique $\dot{m}_{SG1}$ se situe dans une plage de valeurs ($\overline{AB}$) qui est couverte par la première relation mathématique (1) et par la deuxième relation mathématique (2) au flux massique $\dot{m}_{AW1}(t_i)$ donné à l'instant $t_i$ ;

(ii) régulation de la concentration $c_{NB,AW2}$,

en ce que, à une concentration effective $c_{NB,AW2,IST}$ en nitrobenzène, mesurée au niveau du site de mesure, dans les eaux usées AW2, qui est identique ou inférieure à $0{,}98 \cdot cNB,AW2,SOLL$, le flux massique de gaz de stripage SG1 $\dot{m}_{SG1}$ est diminué,

et en ce que, à une concentration effective $c_{NB,AW2,IST}$ en nitrobenzène, mesurée au niveau du site de mesure, dans les eaux usées AW2, qui est identique ou supérieure à $1{,}02 \cdot cNB,AW2,SOLL$, le flux massique de gaz de stripage SG1 $\dot{m}_{SG1}$ est augmenté,

2. Procédé selon la revendication 1, dans lequel on utilise de la vapeur d'eau et/ou de l'azote comme gaz de stripage.

3. Procédé selon l'une des revendications précédentes, dans lequel on détermine, en deux sites de mesure ou plus, indépendamment les unes des autres, une valeur pour $c_{NB,AW2}$ et on forme à partir des valeurs de mesure obtenues la valeur moyenne qui est utilisée comme valeur pour $c_{NB,AW2}$, IST.

4. Procédé selon la revendication 3, dans lequel, dans le cas d'une défaillance d'un ou de plus des deux sites de mesure ou plus, mais pas de tous les sites de mesure, seul ledit au moins un site de mesure restant fonctionnel est utilisé, le procédé comprenant au moins une telle défaillance pendant le stripage effectué en continu.

5. Procédé selon l'une des revendications 1 à 3, dans lequel, dans le cas de la défaillance de tous les sites de mesure, la dernière valeur déterminée, avant la défaillance d'un site de mesure à partir de sa valeur de mesure, pour le flux massique $\dot{m}_{SG1}$ de gaz de stripage SG1 diminué ou augmenté à introduire dans la colonne de stripage selon la régulation de l'étape (ii), est augmentée de 5% à 10% et conservée jusqu'à ce qu'au moins l'un des sites de mesure soit de nouveau fonctionnel.

6. Procédé selon l'une des revendications précédentes, dans lequel, dans l'étape (i), le flux massique $\dot{m}_{SG1}$ pour le flux massique $\dot{m}_{AW1}(t_i)$ donné à l'instant $t_i$ est choisi de telle sorte que le flux massique $\dot{m}_{SG1}$ se situe dans une plage de valeurs qui est couverte par la relation mathématique (0), qui correspond à la valeur de consigne $c_{NB,AW2,SOLL}$, et par la deuxième relation mathématique (2) au flux massique $\dot{m}_{AW1}(t_i)$ donné à l'instant $t_i$.

7. Procédé selon l'une des revendications 1 à 5, dans lequel, dans l'étape (i), le flux massique $\dot{m}_{SG1}$ pour le flux massique $\dot{m}_{AW1}(t_i)$ donné à l'instant $t_i$ est choisi de telle sorte que le flux massique $\dot{m}_{SG1}$ se situe dans une plage de valeurs qui est couverte par la relation mathématique (0), qui correspond à la valeur de consigne $c_{NB,AW2,SOLL}$, et par la première relation mathématique (1) au flux massique $\dot{m}_{AW1}(t_i)$ donné à l'instant $t_i$,

8. Procédé selon l'une des revendications 1 à 5, dans lequel la foule de relations mathématiques linéaires comprend une troisième relation mathématique linéaire pour une troisième valeur de $c_{NB,AW2}$, qui correspond à 99% de la valeur de consigne $c_{NB,AW2,SOLL}$, et une quatrième relation mathématique linéaire pour une quatrième valeur de $c_{NB,AW2}$, qui correspond à 101% de la vapeur de consigne $c_{NB,AW2,SOLL}$ et, dans l'étape (i), le flux massique $\dot{m}_{SG1}$ pour $\dot{m}_{AW1}(t_i)$ donné à l'instant $t_i$ est choisi de telle sorte que le flux massique $\dot{m}_{SG1}$ se situe dans une plage de valeurs qui est couverte par la troisième relation mathématique et par la quatrième relation mathématique au flux massique $\dot{m}_{AW1}(t_i)$ donné à l'instant $t_i$.

9. Procédé selon l'une des revendications précédentes, dans lequel, pour au moins deux combinaisons de conditions limites de (a) $c_{NB,AW1}$, de (b) la température $T_{AW1}$ et de (c) la température $T_{SG1}$, une foule de relations mathématiques linéaires est à chaque fois enregistrée, au moins la température $T_{SG1}$ étant différente dans lesdites au moins deux combinaisons de conditions limites.

**10.** Procédé selon l'une des revendications précédentes, dans lequel le flux d'eaux usées à purifier est produit dans le lavage d'une phase de nitrobenzène, la phase de nitrobenzène étant obtenue par la nitration de benzène avec de l'acide nitrique en présence d'acide sulfurique, suivie de la séparation d'une phase aqueuse d'acide sulfurique.

**11.** Procédé selon la revendication 10, dans lequel le lavage de la phase de nitrobenzène comprend trois étapes, le lavage étant effectué, dans la première étape, avec de l'eau, dans la deuxième étape avec une solution aqueuse de base et, dans la troisième étape, avec de l'eau, des eaux usées étant produites dans chacune des trois étapes et au moins un flux d'eaux usées parmi celles-ci étant purifié en tant que flux d'eaux usées AW1 dans la colonne de stripage.

**12.** Procédé selon l'une des revendications précédentes, dans lequel la valeur maximale $c_{NB,AW2,MAX}$ se situe dans la plage de 2,0 ppm à 10 ppm, par rapport à la masse totale du flux d'eau usées AW2.

**13.** Procédé selon l'une des revendications précédentes, dans lequel $c_{NB,AW2}$ est mesuré en continu ou à des intervalles d'au maximum 6 h.

SG2, $\dot{m}_{SG2}$

AW1, $\dot{m}_{AW1}$, $c_{NB} = c_{NB,AW1}$

AW2, $\dot{m}_{AW2}$, $c_{NB} = c_{NB,AW2}$

SG1, $\dot{m}_{SG1}$

FIG. 1

FIG. 2

FIG. 3

EP 4 143 138 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014170309 A
- US 7402192 B2
- EP 1019324 B1
- ES 2212351 T3